# EUROPÄISCHE PATENTSCHRIFT

(11) **EP 0 438 430 B1**
(45) Veröffentlichungstag und Bekanntmachung des Hinweises auf die Patenterteilung: **22.06.1994**
(21) Anmeldenummer: 89910827.8
(22) Anmeldetag: 29.09.1989
(51) Int. Cl.: G03B 17/26

(54) **FILMKASSETTE**
FILM CASSETTE
CHARGEUR DE FILM

(30) Priorität: 05.10.1988 DE 3833826; 20.01.1989 DE 3901547
(43) Veröffentlichungstag der Anmeldung: 31.07.1991
(73) Patentinhaber: ARNOLD & RICHTER CINE TECHNIK GMBH & CO. BETRIEBS KG., D-80799 München (DE)
(72) Erfinder: GRATZL, Rudolf, D-8000 München 40 (DE)
(74) Vertreter: Maikowski, Michael, Dipl.-Ing. Dr.
(86) Internationale Anmeldenummer: DE8900631
(87) Internationale Veröffentlichungsnummer: WO9004206

(56) Entgegenhaltungen:
- FR-A- 1 458 630
- US-A- 1 428 480
- US-A- 3 537 780
- US-A- 3 829 203

## Beschreibung

Die Erfindung betrifft eine Filmkassette gemäß dem Oberbegriff des Anspruchs 1.

Es sind Filmkassetten mit hintereinanderangeordneten Gehäuseteilen zur Aufnahme der Filmvorratsspule sowie der Filmaufwickelspule bekannt, die wahlweise einen eigenen Antrieb oder einen mit dem Antriebsmotor der Filmkamera koppelbaren Antrieb aufweisen. Eine fensterförmige Öffnung dient zum Überleiten des Films von der Filmkassette zur Filmkamera, wo er belichtet und daran anschließend über das Fenster zurück zur Filmkassette gefördert wird. Eine Dichtung zwischen Filmkassette und Filmkamera sorgt für einen lichtdichten Übergang. Die Verbindung zwischen Filmkassette und Filmkamera wird mittels einer Verriegelungseinrichtung hergestellt, die eine lösbare Kopplung zwischen Filmkassette und Filmkamera ermöglicht.

Ein Nachteil der bekannten Filmkassetten mit hintereinanderangeordneten Gehäuseteilen zur Aufnahme des Filmvorratsbehälters und des Filmaufwickelbehälters besteht in seinen erheblichen Längsabmessungen, was insbesondere bei großen Filmlängen stören kann. Aus diesem Grunde wurden Filmkassetten mit nebeneinander angeordneten Gehäusehälften geschaffen, bei denen die Gehäusehälften zur Aufnahme des Filmvorratsbehälters sowie des Filmaufwickelbehälters nebeneinander angeordnet sind, so daß eine geringe Baulänge der Filmkassette geschaffen wird. Die größere Breite der Filmkassette wirkt im allgemeinen nicht störend, da die Filmkamera ohnehin eine Mindestbreite vorgibt.

Problematisch bei Filmkassetten mit nebeneinander liegenden Gehäusehälften ist jedoch die Filmführung im Bereich des Kassettenfensters, so daß die Gefahr einer Beschädigung des Films, einer erheblichen Geräuschbildung und eines Festsetzens des Films im Bereich der Umlenkeinrichtung besteht.

Aus der FR-A-1 458 630 ist eine Laufbildkamera mit einer Filmkassette bekannt, die aus einem einteiligen Gehäuse mit einer Filmvorratsspule und einer Filmaufwickelspule zur Aufnahme des belichteten bzw. unbelichteten Films besteht. Darüber hinaus weist die Laufbildkamera eine Filmbahn mit einem Kassettenfenster und einen Kassettenantrieb auf. Zum Umleiten des Films von der Filmvorratsspule zur Filmaufwickelspule ist eine manuell erzeugbare Wendeschleife vorgesehen, durch die der Film um 360° umgeleitet wird. Diese manuelle Wendeschleife muß bei jedem Verbinden und Entkoppeln einer Kassette von der Laufbildkamera hergestellt werden, damit der Film von der Filmvorratsspule zur koaxial zur Filmvorratsspule angeordneten Filmaufwickelspule geleitet wird. Dies führt zur unbeabsichtigten Belichtung erheblicher Filmlängen und zu einer umständlichen und zeitaufwändigen Handhabung.

Der Erfindung liegt die Aufgabe zugrunde, eine Filmkassette der eingangs genannten Art zu schaffen, bei der der Film mit geringer Reibung und damit Geräuschbildung sowie ohne Gefahr eines Festsetzens oder einer Beschädigung der Oberfläche des Films von der einen Gehäusehälfte zur anderen Gehäusehälfte der Filmkassette transportiert wird und bei der ohne manuellen Eingriff der Film von der Filmvorratsspule zur Filmaufwickelspule geleitet wird.

Diese Aufgabe wird durch die kennzeichnenden Merkmale des Anspruchs 1 gelöst.

Die erfindungsgemäße Lösung gewährleistet einen schonenden, nahezu geräuschfreien und sicheren Transport des Films von der einen Gehäusehälfte zum Kassettenfenster sowie über die Filmkamera zurück zur anderen Kassettenhälfte bei minimaler Reibung sowie ohne Drehung oder Schränkung des Films in Bezug auf die Filmebene und ermöglicht eine automatische Umleitung des Films von der Filmvorratsspule zur koaxial zur Filmvorratsspule angeordneten Filmaufwickelspule, so daß kein unbeabsichtigtes Belichten des Films erfolgt und eine einfache und sichere Handhabung sichergestellt ist.

Eine vorteilhafte Weiterbildung der erfindungsgemäßen Lösung ist dadurch gekennzeichnet, daß die Wendeschleifeneinrichtung aus einer Hülse besteht, an der die Außenfläche des Films anliegt und die eine gleichmäßige Wendelung von 360° aufweist, wobei der Filmeinlauf und der Filmauslauf so angeordnet sind, daß die Seitenkanten des Films parallel zueinander in die Hülse ein- und aus der Hülse austreten. Diese Ausgestaltung der erfindungsgemäßen Lösung gewährleistet bei ausreichender Steifigkeit des Films eine Anlage der Außenfläche des Films an der Hülse und damit eine leichtgängige Führung und Wendelung des Films vom Filmeinlauf zum Filmauslauf bei gleichzeitig sichergestellter paralleler Führung der Seitenkanten des Films im Bereich des Filmeinlaufs und des Filmauslaufs.

Eine weitere vorteilhafte Weiterbildung der erfindungsgemäßen Lösung ist dadurch gekennzeichnet, daß die Wendeschleifeneinrichtung aus einem Dorn besteht, an dem die Innenfläche des Films anliegt und der eine gleichmäßige Wendelung von 360° aufweist, wobei der Filmeinlauf und der Filmauslauf so angeordnet sind, daß die Seitenkanten des Films parallel zueinander verlaufen. Auch bei dieser Variante der erfindungsgemäßen Lösung wird eine exakte Führung und Wendelung des Films bei minimaler Oberflächenbeanspruchung und damit minimalem Geräusch sichergestellt, wobei durch die Formgebung der Wendeschleifeneinrichtung parallele Seitenkanten des Films im Bereich des Filmeinlaufs und des Filmauslaufs sichergestellt sind.

Eine weitere vorteilhafte Ausgestaltung der erfindungsgemäßen Lösung ist dadurch gekennzeichnet, daß die Wendeschleifeneinrichtung aus einem Filmkanal mit einem in eine Hülse einsetzbaren Dorn besteht, an dem die Innen- und Außenfläche des Films anliegt und der eine gleichmäßige Wendelung von 360° aufweist und daß der Filmeinlauf und der Filmauslauf so angeordnet sind, daß die Seitenkanten des Films parallel zueinander verlaufen. Bei dieser kombinierten Lösung wird der Film nach Art eines Filmkanals zwischen einer Hülse und einem in die Hülse einsetzbaren Dorn geführt, wobei Hülse und Dorn teilbar sind, so daß eine leichte Reinigung erfolgen kann. Diese Lösungsvariante zeichnet sich durch ihre universelle Verwendbarkeit für Filme unterschiedlichster Art aus.

In einer weiteren vorteilhaften Ausgestaltung weist die Wendeeinrichtung Auflagekanten auf, die derart ausgebildet sind, daß nur die Perforationsränder des Films geführt sind und der Bildbereich berührungslos durch die Wendeschleifeneinrichtung geführt wird. Durch dieses Lösungsmerkmal wird eine Beschädigung, insbesondere ein Zerkratzen der Oberfläche bei Vorhandensein von Partikeln im Bereich der Wendeschleifeneinrichtung vermieden und gleichzeitig eine deutliche Geräuschreduzierung bei der Führung des Films erreicht.

Eine weitere vorteilhafte Ausgestaltung der erfindungsgemäßen Lösung ist dadurch gekennzeichnet, daß die Wendeschleifeneinrichtung als Lichtlabyrinth ausgeführt ist und einen lichtdichten Abschluß jeder Gehäusehälfte bildet. Die Ausgestaltung der Wendeschleifeneinrichtung als Lichtlabyrinth gewährleistet einen lichtdichten Abschluß beider Gehäusehälften, so daß beide Gehäusehälften zum Einlegen oder Entnehmen des Filmaufwickelbehälters oder des Filmvorratsbehälters geöffnet werden können, ohne daß die Gefahr des Einfallens von Streulicht in die jeweils andere Gehäusehälfte besteht. Damit eignet sich die Kassette als Tageslichtkassette, die das Einlegen bzw. Entnehmen des Films nicht nur unter Dunkelkammerbedingungen ermöglicht.

Eine weitere vorteilhafte Ausgestaltung der erfindungsgemäßen Lösung ist dadurch gekennzeichnet, daß der Durchmesser und die Steigung der Wendeschleifeneinrichtung so ausgebildet sind, daß der Film in seiner natürlichen Krümmung durch die Wendeschleifeneinrichtung geführt ist. Bei dieser Ausgestaltung der Wendeschleifeneinrichtung wird der natürliche Drall bzw. die natürliche Krümmung des Films ausgenutzt und eine entsprechende Wendelung herbeigeführt, die sicherstellt, daß der Film in der Filmebene weder gedreht noch geschränkt wird.

In einer vorteilhaften Weiterbildung der erfindungsgemäßen Lösung ist im Bereich des Filmeinlaufs und des Filmauslaufs der Wendeschleifeneinrichtung zumindest jeweils eine in die Filmperforation eingreifende Zahntrommel angeordnet, wobei beide Zahntrommeln im Bereich der Einlauf- und Auslaufseite derart miteinander gekoppelt sind, daß der Film innerhalb der Wendeschleifeneinrichtung auf eine konstante Länge gehalten wird.

Diese passiv mit dem Film mitdrehende Einrichtung sorgt dafür, daß der Film durch ungleichmäßigen Filmzug im Bereich der Wendeschleifeneinrichtung nicht festgezogen wird und sich dadurch festsetzt, was zu einer Beschädigung bis hin zum Reißen des Films führen kann. Darüberhinaus wird durch die miteinander gekoppelten Distanz-Zahntrommeln das Gleitvermögen des Films innerhalb der Wendeschleifeneinrichtung erhöht, da die konstante Länge zwischen dem Filmeinlauf und dem Filmauslauf so bemessen werden kann, daß minimale Anlageflächen des Films an der Wendeschleifeneinrichtung gegeben sind.

Vorteilhafte Ausgestaltungen und Weiterbildungen der Erfindung sind in den abhängigen Ansprüchen gekennzeichnet.

Die Erfindung wird nachstehend an Hand der in der Zeichnung dargestellten Ausführungsbeispiele näher erläutert. Es zeigen:
- Figur 1: einen Querschnitt durch eine Filmkassette mit nebeneinanderliegenden Gehäusehälften;
- Figur 2: eine perspektivische Ansicht eines gewendelten Filmteils;
- Figur 3: einen Schnitt durch die Filmkassette im Bereich der Wendeschleifeneinrichtung;
- Figur 4: einen Längsschnitt durch die Filmkassette mit Blick auf die Filmvorratsseite der Filmkassette;
- Figur 5: einen Längsschnitt durch die Filmkassette mit Blick auf die Filmaufwickelseite der Filmkassette und
- Figur 6: einen Schnitt durch den Wendeschleifenkanal.

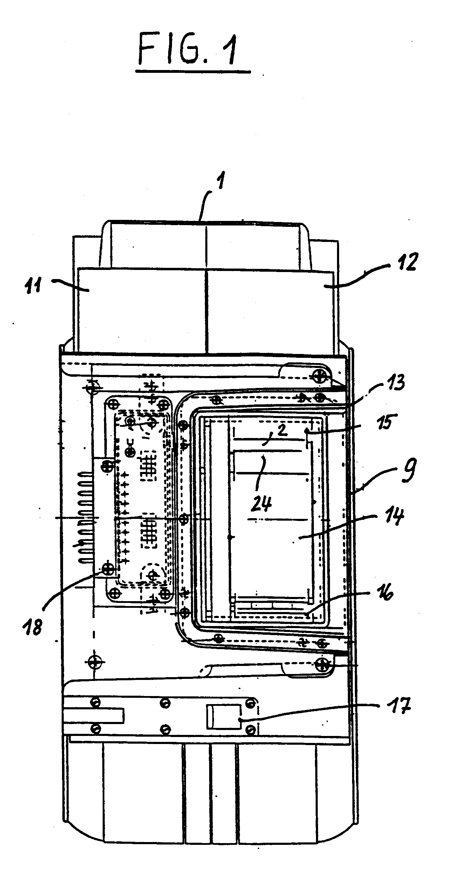

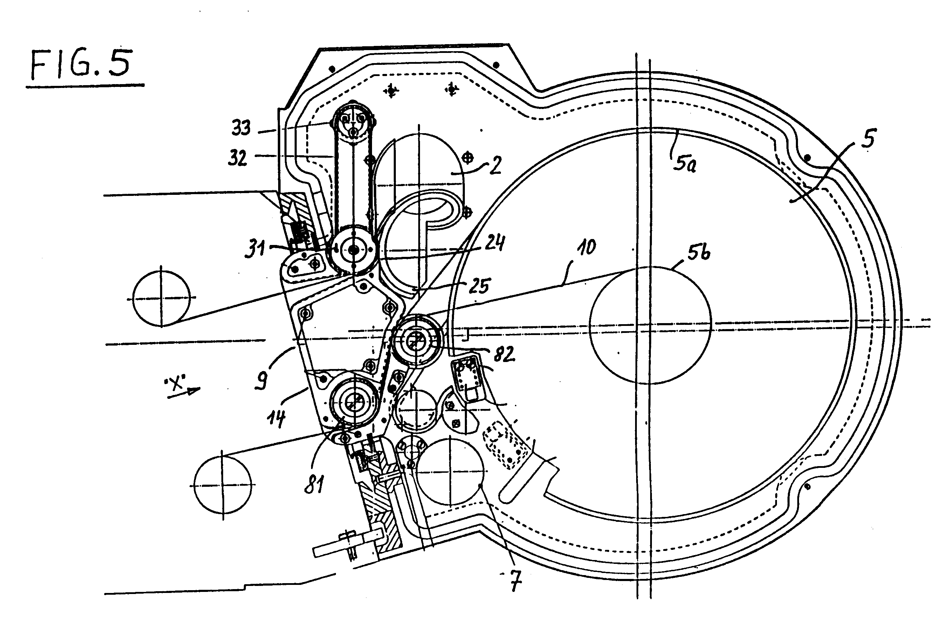

Figur 1 zeigt eine Draufsicht auf eine Filmkassette mit einem Gehäuse 1, das nebeneinanderangeordnete Gehäusehälften 11, 12 zur Aufnahme eines Filmaufwickelbehälters sowie eines Filmvorratbehälters aufweist. Die in Figur 1 dargestellte Ansicht ist auf den Bereich des Kassettenfensters der Kassette entsprechend der Ansicht X gemäß Figur 5 gerichtet und zeigt das Kassettenfenster 9, das durch eine Dichtung 13 gegenüber der Filmbahn der Filmkamera abdichtbar ist. Die Filmbahn 14 des Kassettenfensters 9 weist zwei Filmkanäle 15, 16 auf, durch die der Film in die Aufwickelseite der Filmkassette 12 bzw. in den Filmauslauf 24 eines Endes der Wendeschleifeneinrichtung 2 austritt.

Die mechanische Verbindung zwischen der Filmkassette und einer Filmkamera wird mittels einer Verriegelungseinrichtung 17 hergestellt, während eine elektrische Verbindung über die Kontakteinrichtung 18 geschaffen wird.

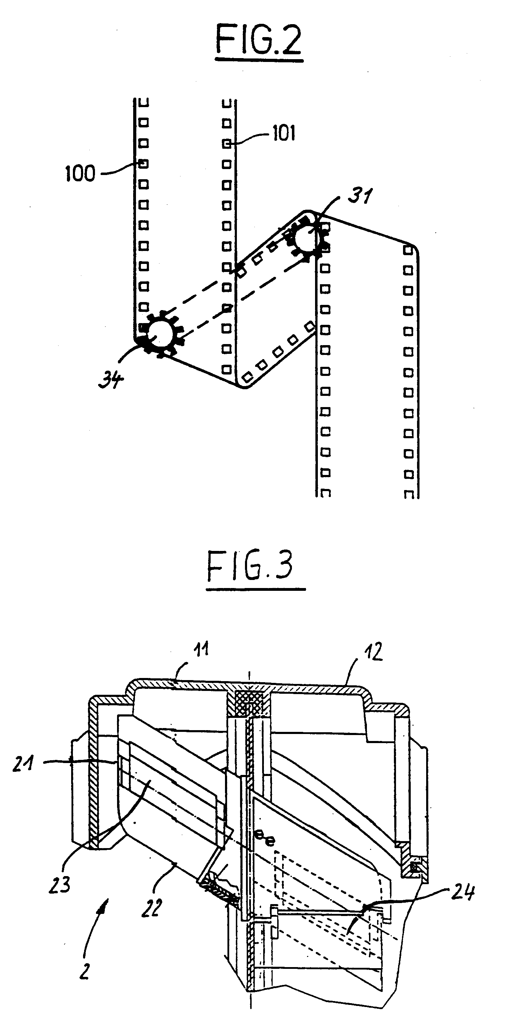

Figur 2 zeigt einen Abschnitt eines Films 10 mit seitlichen Perforationsrändern, dessen mittlerer Teil eine Form aufweist, die sich einstellt, wenn ein auf eine Spule aufgewickelter Film abgewickelt wird und frei herabfällt. Dabei stellt sich eine Wendelung des Films 10 ein, die aus der Biegung des Films im aufgerollten Zustand resultiert. Diese "natürliche" Wendelung des Films 10 wird im folgenden bei der Schaffung der Wendeschleifeneinrichtung gemäß Figur 3 ausgenutzt.

Figur 3 zeigt einen Schnitt durch die Filmkassette im Bereich der Wendeschleifeneinrichtung, die nicht geschnitten dargestellt ist.

Die Wendeschleifeneinrichtung 2 ist schrägliegend in der Kassette zwischen den Gehäusehälften 11, 12 der Filmkassette angeordnet und weist einen Filmeinlauf 23 im Bereich der Gehäusehälfte 11 sowie einen Filmauslauf 24 im Bereich der anderen Gehäusehälfte 12 auf. Die Wendelung der Wendeschleifeneinrichtung 2 entspricht der Wendelung des Films 10 gemäß Figur 2 und wird durch eine entsprechende Führungsbahn in einer Hülse oder auf einem Dorn hergestellt.

In der Ausführungsform gemäß Figur 3 besteht die Wendeschleifeneinrichtung aus einem Filmkanal, der eine Wendelung des Films über einen Winkel von 360° bewirkt, was im vorliegenden Ausführungsbeispiel durch eine Hülse 22 und einen Dorn bzw. Einsatz 21 geschaffen wird, wobei Hülse 22 und Dorn 21 teilbar sind, indem der Einsatz 21 in die Hülse 22 eingesteckt wird.

Zwischen der Innenfläche der Hülse 22 und der Außenfläche des Dorns 21 ist eine der Breite des Films entsprechende Bahn ausgebildet, durch die der Film von der einen Gehäusehälfte 11 zur anderen Gehäusehälfte 12 geleitet wird. Dabei erfolgt die Führung des Films 10 im wesentlichen im Bereich der Perforationskanten 100, 101 gemäß Figur 2 mittels Auflagekanten, die am Rand des Filmkanals an der Innenseite der Hülse 22 sowie der Außenfläche des Dorns 21 ausgebildet sind.

Die Teilung der Wendeschleifeneinrichtung 2 durch einen in die Hülse 22 einsteckbaren Dorn 21 dient im wesentlichen dem Zweck der Reinigung der Wendeschleifeneinrichtung 2, so daß Abriebteilchen leicht entfernt werden können, ohne daß eine umständliche und zeitraubende Reinigung der Wendeschleifeneinrichtung 2 erforderlich ist.

Neben dieser Ausführungsform ist es analog möglich, die 360°-Wendelung ausschließlich mit einer Hülse oder einen Dorn zu bewirken.

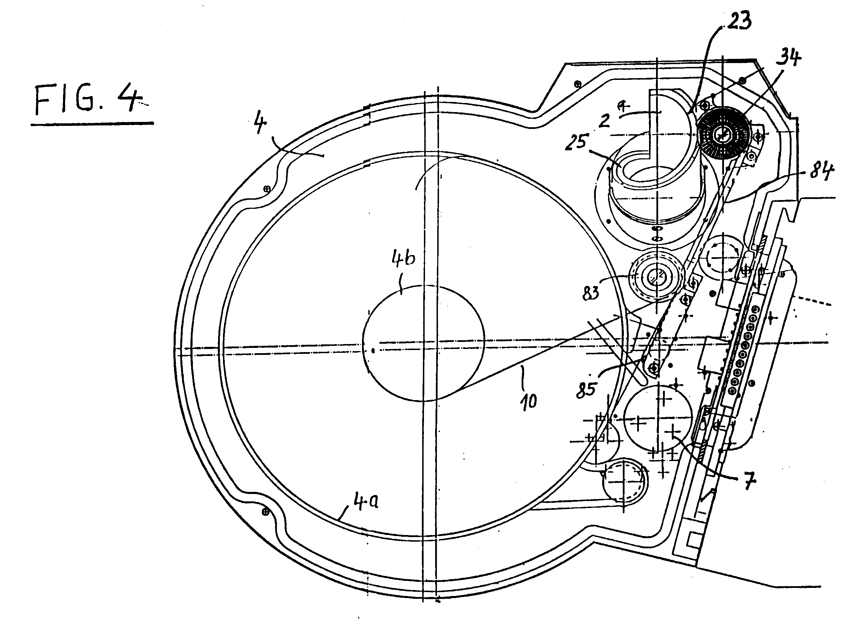

In den Figuren 4 und 5 wird der Aufbau der Wendeschleifeneinrichtung sowie die Filmführung im Bereich der beiden Gehäusehälften verdeutlicht.

Figur 4 zeigt in einem Längsschnitt durch die Filmkassette mit Blick auf den Filmvorratsbehälter 4 die Führung des Films 10 im Bereich der einen Gehäusehälfte. Der Film gelangt von der Filmvorratsrolle 4 bei maximalem Filmdurchmesser 4a und minimalem Filmdurchmesser 4b über die Umlenkrolle 83 und die Filmführungen 84, 85 zu einer ersten Distanz-Zahntrommel 34 im Bereich des Filmeinlaufs 23 der Wendeschleifeneinrichtung 2.

Dabei verdeutlicht Figur 4 die Konfiguration der Wendeschleifeneinrichtung 2 sowie die Anordnung der Auflagekante 25 zur Auflage der Filmperforation.

Über die Distanz-Zahntrommel 34, die der Film umschlingt und dabei entsprechend umgelenkt wird, wird der Film 10 in den Filmeinlauf der Wendeschleifeneinrichtung 2 geleitet, wo er entsprechend seinem natürlichen Wickeldrall um 360° umgelenkt und über den Filmauslauf der Wendeschleifeneinrichtung 2 zum Kassettenfenster 9 gemäß den Figuren 1 und 5 geleitet wird.

Figur 5 zeigt einen Schnitt durch die Filmkassette mit Blick auf die Filmaufwickelseite der Filmkassette mit dem darin befindlichen Filmaufwickelbehälter 5.

Der Film 10 gelangt von dem Filmvorratsbehälter 4 gemäß Figur 4 durch die Wendeschleifeneinrichtung 2 zum Filmauslauf der Wendeschleifeneinrichtung 2, wo sein Perforationsrand von der Distanz-Zahntrommel 31 erfaßt wird. Von hier gelangt der Film 10 durch das Kassettenfenster 9 in die Filmkamera, wo er über Umlenkrollen und einen Transportgreifer durch das Bildfenster transportiert wird.

Anschließend gelangt der Film erneut durch das Kassettenfenster 9 und über Umlenkrollen 81, 82 zum Filmaufwickelbehälter 5, auf den er vom minimalen Durchmesser 5b zum maximalen Durchmesser 5a aufgewickelt wird.

Der Kassettenantrieb erfolgt mittels eines Motors 7, dessen Steuersignale über den elektrischen Anschluß 18 von der Filmkamera abgegeben werden.

Die Distanz-Zahntrommel 31 weist an ihrem Umfang verteilt Zähne auf, deren Teilung der Perforationsweite des Films entspricht. Die Distanz-Zahntrommel 31 ist über ein Synchronisationselement, das im vorliegenden Ausführungsbeispiel aus einem Zahnriemen 32 bsteht, mit einem Zahnrad 33 verbunden, das mit dem Distanz-Zahnrad 34 gemäß Figur 4 gekoppelt ist.

Infolge der festen Kopplung zwischen den Distanz-Zahntrommeln 31 und 34 und deren formschlüssige Verbindung mit der Filmperforation wird sichergestellt, daß der Film im Bereich der Wendeschleifeneinrichtung 2 eine konstante Länge hält, so daß er sich infolge ungleichen Antriebs bzw. unterschiedlichen Zugs auf der Aufwickel- und Abwickelseite der Filmkassette nicht festzieht bzw. festsetzt.

Figur 5 verdeutlicht die Auflagekante 25 der Wendeschleifeneinrichtung 2, mit deren Hilfe eine Führung des Films 10 ausschließlich im Bereich der Perforationsränder ermöglicht wird, so daß die Oberfläche des Films im Bereich der Filmbilder, d.h. innerhalb der Perforationsränder 100, 101 gemäß Figur 2 berührungsfrei durch die Wendeschleifeneinrichtung 2 gelangt. Dadurch wird zum einen die Filmoberfläche geschont und zum anderen wegen der geringen Auflagefläche sichergestellt, daß ein Minimum an Geräuschen beim Transport des Films erzeugt wird.

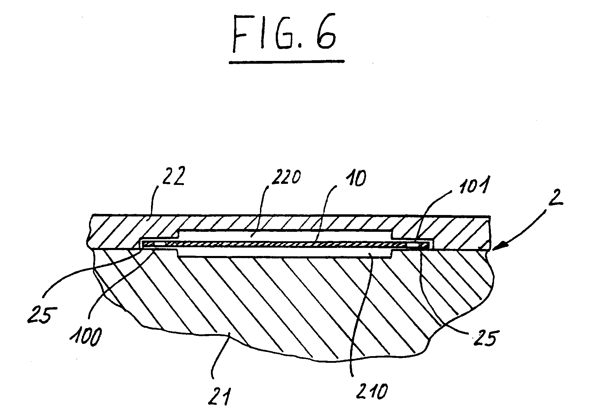

Figur 6 zeigt einen Schnitt durch den Wendeschleifenkanal und verdeutlicht die Führung eines Films 10 innerhalb der Wendeschleifeneinrichtung 2.

Die Außenfläche des Dorns 21 sowie der Hülse 22, zwischen denen der Film 10 innerhalb der Wendenschleifeneinrichtung 2 geführt wird, weist eine Ausnehmung 210 bzw. 220 im Bereich der Bildfenster des Films 10 auf, so daß ausschließlich der Perforationsrand 100, 101 des Films 10 auf den Außenflächen 21 bzw. 22 der Hülse bzw. des Dorns der Wendeschleifeneinrichtung 2 zur Auflage kommt.

Durch diese spezielle Ausbildung des Wendeschleifenkanals wird neben einer Geräuschreduzierung eine berührungsfreie Führung des Films im Bildbereich gewährleistet, so daß kein Zerkratzen der Oberfläche des Films im Bereich der Bildinhalte erfolgen kann. Die Tiefe der Ausnehmungen 210, 220 ist so bemessen, daß eine berührungsfreie Führung des Films 10 im gesamten Bereich des Wendeschleifenkanals gewährleistet und gleichwohl eine ausreichende Führung des Films sichergestellt ist.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen.

## Patentansprüche

1. Filmkassette mit einem Gehäuse (1), in dem sich in nebeneinander angeordneten Gehäusehälften (11, 12) ein Filmvorratsbehälter (4) und ein Filmaufwickelbehälter (5) zur Aufnahme eines belichteten und unbelichteten Films (10) befinden, einem auf eine Filmführungsfläche (84, 85) einer Filmkamera aufsetzbaren, in einer Filmbahn (14) angeordneten Kassettenfenster (9), einem Kassettenantrieb und einer zwischen der Filmbahn (14) und einem der Filmbehälter (4, 5) angeordneten Wendeschleifeneinrichtung (2), in der der Film (10) von der einen Gehäusehälfte (11) über einen Filmeinlauf (23) der Wendeschleifeneinrichtung (2) zu einem zur anderen Gehäusehälfte (12) führenden Filmauslauf (24) der Wendeschleifeneinrichtung (2) geleitet wird,
**dadurch gekennzeichnet,** daß
die Wendeschleifeneinrichtung (2) aus einer Hülse (22) und einem in die Hülse (22) einsetzbaren Dorn (21) besteht, an denen die Innen- und Außenfläche des Films (10) anliegt und die eine gleichmäßige Wendelung von 360° aufweisen, und daß der Filmeinlauf (23) und der Filmauslauf (24) so angeordnet sind, daß die Seitenkanten des in die Wendeschleifeneinrichtung (2) einlaufenden Teils des Films (10) parallel zu den Seitenkanten des aus der Wendeschleifeneinrichtung (2) auslaufenden Teils des Films (10) verlaufen.

2. Filmkassette nach Anspruch 1 , **dadurch gekennzeichnet,** daß die Wendeschleifeneinrichtung (2) Auflagekanten (25) aufweist, derart, daß nur die Perforationsränder (100, 101) des Films (10) geführt sind und der Bildbereich berührungslos durch die Wendeschleifeneinrichtung (2) geführt ist.

3. Filmkassette nach Anspruch 1 oder 2, **dadurch gekennzeichnet,** daß die Wendeschleifeneinrichtung (2) als Lichtlabyrinth ausgeführt ist und einen lichtdichten Abschluß jeder Gehäusehälfte (11, 12) bildet.

4. Filmkassette nach einem der vorangehenden Ansprüche, **dadurch gekennzeichnet,** daß der Durchmesser und die Steigung der Wendeschleifeneinrichtung (2) so ausgebildet sind, daß der Film (10) in seiner natürlichen Krümmung (3) durch die Wendeschleifeneinrichtung (2) geführt ist.

5. Filmkassette nach einem der vorangehenden Ansprüche, **dadurch gekennzeichnet,** daß im Bereich des Filmeinlaufs (23) und des Filmauslaufs (24) der Wendeschleifeneinrichtung (2) zumindest jeweils eine in die Filmperforation (100, 101) eingreifende Distanz-Zahntrommel (31, 34) angeordnet ist und daß die Distanz-Zahntrommeln (31, 34) derart miteinander gekoppelt sind, daß der Film (10) innerhalb der Wendeschleifeneinrichtung (2) auf eine konstante Länge gehalten wird.

6. Filmkassette nach Anspruch 5, **dadurch gekennzeichnet,** daß die Distanz-Zahntrommeln (31, 34) über ein Synchronisationselement (32) derart miteinander verbunden sind, daß eine konstante Filmlänge im Bereich der Wendeschleifeneinrichtung (2) vorgesehen ist.

7. Filmkassette nach Anspruch 6, **dadurch gekennzeichnet,** daß das Synchronisationselement aus einem Zahnriemen (32) besteht, der ein Zahnrad der einen Distanzzahntrommel (31) mit einem Zahnrad (33) der anderen Distanzzahntrommel (34) verbindet.

8. Filmkassette nach einem der vorangehenden Ansprüche, **dadurch gekennzeichnet,** daß die Wendeschleifeneinrichtung (2) im Querschnitt des Gehäuses (1) schräg von der einen Gehäusehälfte (11) zur anderen Gehäusehälfte (12) verläuft.

## Claims

1. Film cartridge with a housing (1) with two housing halves (11, 12) arranged side by side in which a film feed container (4) and a film take-up container (5) are mounted for holding an exposed and unexposed film (10), with a cartridge film gate (9) mounted in a film path (14) and adapted to fit onto a film guide face (84, 85) of a film camera, with a cartridge drive and with a turning loop device (2) which is arranged between the film path (14) and one of the film containers (4, 5) and in which the film (10) is directed from one half (11) of the housing through a film inlet (23) of the turning loop device (2) to a film outlet (24) of the turing loop device (2) leading to the other half (12) of the housing,
characterised in that
the turning loop device (2) consists of a sleeve (22) and a spike (21) insertable into the sleeve (22) wherein the sleeve and spike are adjoined by the inner and outer face of the film (10) and have an even twisting of 360°, and that the film inlet (23) and the film outlet (24) are arranged so that the side edges of the part of the film (10) leading into the turning loop device (2) run parallel to the side edges of the part of the film (10) leading out of the turning loop device (2).

2. Film cartridge according to claim 1,
characterised in that the turning loop device (2) has bearing edges (25) so that only the perforation edges (100, 101) of the film (10) are guided and the image area is guided contact-free through the turning loop device (2).

3. Film cartridge according to claim 1 or 2
characterised in that the turning loop device (2) is designed as a light labyrinth and forms a light-proof closure for each housing half (11, 12).

4. Film cartridge according to one of the preceding claims, characterised in that the diameter and pitch of the turning loop device (2) are designed so that the film (10) is guided in its natural curvature (3) through the turning loop device (2).

5. Film cartridge according to one of the preceding claims, characterised in that at least one distance sprocket (31, 34) engaging in the film perforation (100, 101) is arranged in the area of each film inlet (23) and film outlet (24) of the turning loop device (2) and that the distance sprockets (31, 34) are coupled together so that the film (10) is held at a constant length inside the turning loop device (2).

6. Film cartridge according to claim 5,
characterised in that the distance sprockets (31, 34) are connected together by a synchronization element (32) so that a constant film length is provided in the area of the turning loop device (2).

7. Film cartridge according to claim 6,
characterised in that the synchronization element consists of a toothed belt (32) which connects a gearwheel of one distance sprocket (31) to a gearwheel (33) of the other sprocket (34).

8. Film cartridge according to one of the preceding claims, characterised in that the turning loop device (2) runs inclined from one half (11) of the housing to the other half (12) in the cross-sectional plane of the housing (1).

## Revendications

1. Chargeur de film comprenant un boîtier (1), dans lequel se trouvent, dans des moitiés de boîtier (11,12) agencées l'une à côté de l'autre, un réservoir débiteur de film (4) et un réservoir d'enroulement de film (5) pour recevoir un film exposé et non exposé (10), une fenêtre de chargeur (9) qui peut être montée sur une surface de guidage de film (84,85) d'une caméra et qui est agencée dans une voie du film (14), un organe d'entraînement de chargeur et un dispositif à boucle de retour (2) qui est agencé entre la voie du film (14) et un des réservoirs de film (4,5) et dans lequel le film (10) est conduit depuis l'une des moitiés de boîtier (11) à une sortie de film (24) du dispositif à boucle de retour (2) conduisant à l'autre des moitiés de boîtier (12), en passant par une entrée de film (23) de dispositif à boucle de retour (2),
caractérisé en ce que le dispositif à boucle de retour (2) est constitué d'une douille (22) et d'un mandrin (21) qui peut être introduit dans la douille (22), sur lesquels la face interne et la face externe du film (10) prennent appui et qui présentent une disposition en hélice uniforme de 360° et en ce que l'entrée de film (23) et la sortie de film (24) sont agencées de façon que les bords latéraux de la partie du film (10) pénétrant dans le dispositif à boucle de retour (2) s'étendent parallèlement aux bords latéraux de la partie du film (10) sortant du dispositif à boucle de retour (2).

2. Chargeur de film suivant la revendication 1, caractérisée en ce que le dispositif à boucle de retour (2) présente des bords d'appui (25) de telle façon que seuls les bords perforés (100,101) du film (10) soient guidés et que la zone d'image soit guidée sans contact à travers le dispositif à boucle de retour (2).

3. Chargeur de film suivant l'une des revendications 1 et 2, caractérisé en ce que le dispositif à boucle de retour (2) est réalisé sous la forme d'un labyrinthe à lumière et en ce qu'il forme une fermeture étanche à la lumière de chaque moitié de boîtier (11,12).

4. Chargeur de film suivant l'une des revendications précédentes, caractérisé en ce que le diamètre et le pas du dispositif à boucle de retour (2) sont réalisés de façon que le film (10) soit guidé à travers le dispositif à boucle de retour (2) suivant sa courbure naturelle (3).

5. Chargeur de film suivant l'une des revendications précédentes, caractérisé en ce que, dans la zone d'entrée du film (23) et de la sortie du film (24) du dispositif à boucle de retour (2), au moins un rouleau denté d'écartement (31,34) pénétrant dans la perforation du film (100,101) est agencé et en ce que les rouleaux dentés d'écartement (31,34) sont mutuellement couplés de façon que le film (10) soit maintenu à une longueur constante à l'intérieur du dispositif à boucle de retour (2).

6. Chargeur de film suivant la revendication 5, caractérisé en ce que les rouleaux dentés d'écartement (31,34) sont mutuellement reliés par un élément de synchronisation (32) de façon qu'une longueur de film constante soit prévue dans la zone du dispositif à boucle de retour (2).

7. Chargeur de film suivant la revendication 6, caractérisé en ce que l'élément de synchronisation est constitué d'une courroie dentée (32) qui relie une roue dentée de l'un des rouleaux dentés d'écartement (31) à une roue dentée (33) de l'autre rouleau denté d'écartement (34).

8. Chargeur de film suivant l'une des revendications précédentes, caractérisé en ce que le dispositif à boucle de retour (2) s'étend, dans une section transversale du boîtier (1), de manière inclinée de l'une des moitiés de boîtier (11) à l'autre moitié de boîtier (12).
